# EUROPEAN PATENT APPLICATION

(11) **EP 4 528 644 A1**
(43) Date of publication of application: **26.03.2025**
(21) Application number: 23909207.5
(22) Date of filing: 21.08.2023
(51) Int. Cl.: G06T 7/73

(54) **REPOSITIONING METHOD, APPARATUS, COMPUTER DEVICE, AND STORAGE MEDIUM**

(30) Priority: 29.12.2022 CN 202211702589
(71) Applicant: Shenzhen Pudu Technology Co., Ltd., Shenzhen, Guangdong 518000 (CN)
(72) Inventor: WU, Jinlong, Shenzhen, Guangdong 518000 (CN)
(74) Representative: Corradini, Corrado
(86) International application number: PCT/CN2023/113945
(87) International publication number: WO 2024/139267

(57) **Abstract**

The present application discloses a repositioning method, an apparatus, a computer device, and a storage medium. The method comprises: obtaining environment image data of a target object to be positioned at a current position; extracting global description information from the environment image data; determining K map frames having the highest similarity with the environment image data from a visual map according to the global description information; when it is determined that the current position of the target object does not have a symmetric scene or a plurality of similar scenes in the visual map according to the K map frames having the highest similarity, if it is determined that a map frame having the highest similarity is a target similar scene of the current position, repositioning the target object according to the map frame having the highest similarity.

## Description

### CROSS REFERENCE TO RELATED APPLICATION

The present application is based on and claims priority to Chinese Patent Application with No. 202211702589.0 and filed on December 29, 2022 and titled "Repositioning Method, Apparatus, Computer Device, and Storage Medium", the content of which is expressly incorporated herein by reference in its entirety.

### TECHNICAL FIELD

The present disclosure relates to the field of robot technology, and particularly to a repositioning method and apparatus, a computer device and a storage medium.

### BACKGROUND

With the development of robot technology, robots have brought great convenience to our lives. In order to ensure the normal operation of the robot, it is necessary to obtain an initial position of the robot, i.e., the robot needs to be repositioned.

In the related art, when a robot is repositioned, a map frame with the maximum matching degree is usually found from preset map data according to current image data of the robot, and then the robot is repositioned according to the map frame with the maximum matching degree. However, the repositioning of the robot in the existing technologies is prone to errors. Accordingly, how to improve the accuracy of repositioning of the robot becomes an urgent technical problem to be addressed by those skilled in the art.

### SUMMARY

According to the embodiments of the present disclosure, a repositioning method and apparatus, a computer device, and a storage medium are provided.

In the first aspect of the present disclosure, a repositioning method is provided, including:
acquiring environmental image data of a target object to be positioned at a current position;
extracting global description information from the environmental image data;
determining *K* map frames with a maximum similarity to the environmental image data in the visual map according to the global description information, where *K* is an integer, and satisfies *K≥*1; and
when determining that there is no symmetrical scene or a plurality of similar scenes in the visual map for the current position of the target object according to the *K* map frames with the maximum similarity, and when a map frame with a maximum similarity among the *K* map frames is determined as a target similar scene for the current position, repositioning the target object according to the map frame with the maximum similarity among the *K* map frames.

In the second aspect of the present disclosure, a repositioning apparatus is provided, including:
a data acquisition module, configured to acquire environmental image data of a target object to be positioned at a current position;
an information extraction module, configured to extract global description information from the environmental image data;
a map frame determination module, configured to determine K map frames with a maximum similarity to the environmental image data in the visual map according to the global description information, where *K* is an integer, and satisfies *K*≥1;
a repositioning module, configured to, when determining that there is no symmetrical scene or a plurality of similar scenes in the visual map for the current position of the target object according to the *K* map frames with the maximum similarity, and when a map frame with a maximum similarity among the *K* map frames is determined as a target similar scene for the current position, reposition the target object according to the map frame with the maximum similarity among the *K* map frames.

In the third aspect of the present disclosure, a computer device is provided, including a processor and a memory storing a computer program. The processor, when executing the computer program, implements the above-mentioned method.

In the fourth aspect of the present disclosure, a computer-readable storage medium is provided, on which a computer program is stored. The computer program, when executed by a processor, causes the processor to implement the above-mentioned method.

The details of one or more embodiments of the present disclosure are set forth in the accompanying drawings and the description below. Other limitations and advantages of the present disclosure will be obvious from the description, drawings, and claims.

### BRIEF DESCRIPTION OF THE DRAWINGS

In order to more clearly illustrate the technical solution of the present disclosure or the the prior art, accompanying drawings required for use in the embodiments or the description of the prior art will be briefly introduced below. Obviously, the drawings described below are merely some embodiments of the present disclosure, and those skilled in the art can obtain drawings of other embodiments according to these drawings without paying any creative effort.
FIG. 1 is an application environment diagram of a repositioning method according to an embodiment.
FIG. 2 is a flow chart showing a repositioning method according to an embodiment.
FIG. 3 is a flow chart of steps of determining whether there exists a plurality of similar scenes in a visual map according to an embodiment.
FIG. 4 is a flow chart of steps of determining whether K map frames belong to one scene according to an embodiment.
FIG. 5 is a flow chart of steps of determining whether there exists a symmetrical scene in a visual map for a current position according to an embodiment.
FIG. 6 is a flow chart showing a repositioning method according to another embodiment.
FIG. 7 is a block diagram of a repositioning apparatus according to an embodiment.
FIG. 8 is a an internal structure diagram of a computer device according to an embodiment.

### DETAILED DESCRIPTION

In order to facilitate understanding of the present disclosure, the present disclosure will be described more comprehensively below with reference to the relevant drawings. The preferred embodiments of the present disclosure are shown in the accompanying drawings. However, the present disclosure may be implemented in many different forms and is not limited to the embodiments described herein. Rather, the purpose of providing these embodiments is to make the understanding of the present disclosure more thorough and complete.

Unless defined otherwise, all technical and scientific terms used herein have the same meaning as commonly understood by those skilled in the art to which the present disclosure belongs. The terms used in the specification herein are for the purpose of describing specific embodiments only and are not intended to limit the present disclosure. As used herein, the term "and/or" includes any and all combinations of one or more of relevant listed items.

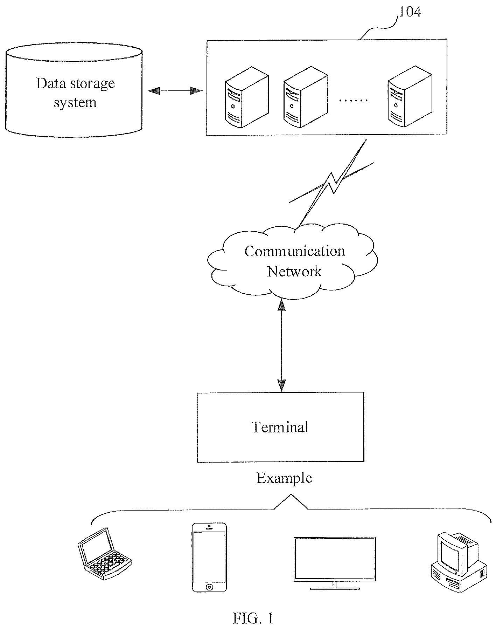

The repositioning method provided in the embodiments of the present disclosure can be applied in the application environment shown in FIG. 1. A terminal is in communication with a server 104 via a network, and the terminal can acquire data from the server via the network, such as visual map and environmental image data, etc. A data storage system may store data that the server 104 needs to process. The data storage system may be integrated on the server 104 or placed on the cloud or other network servers. The terminal acquires environmental image data of a target object to be positioned at a current position, extracts global description information from the environmental image data, and then determines *K* map frames with the maximum similarity to the environmental image data in the visual map according to the global description information; where *K* is an integer, and satisfies that K≥1 When it is determined that there are no symmetrical scene or a plurality of similar scenes in the visual map for the current position of the target object according to the *K* map frames with the maximum similarity, if it is determined that the map frame with the maximum similarity among the *K* map frames is a target similar scene for the current position, the target object is repositioned according to the map frame with the maximum similarity among the K map frames. The terminal may be, but is not limited to, various personal computers, laptops, smart phones, tablet computers, and robots. The server 104 may be implemented as an independent server or a server cluster consisting of a plurality of servers. The robots may be various food delivery robots, etc.

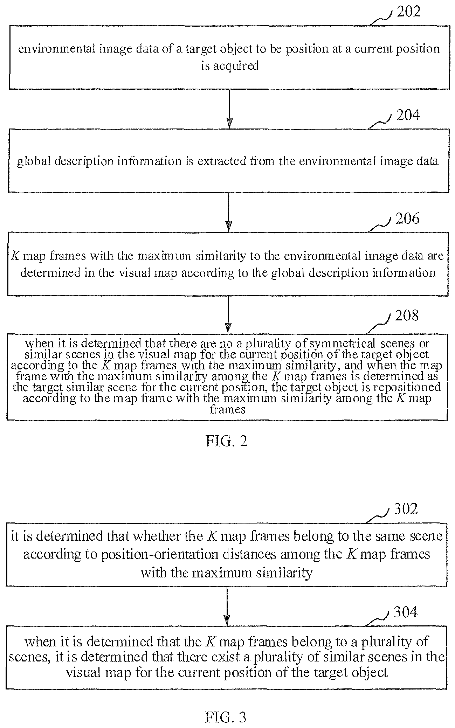

In an embodiment, as shown in FIG. 2, a repositioning method is provided, which is applied to the terminal in FIG. 1 as an example for illustration. The method may include the following steps.

Step 202: environmental image data of a target object to be positioned at a current position is acquired.

The target object may refer to an object that needs to be repositioned. The target object may be any robot that needs to be repositioned, such as a food delivery robot.

The repositioning may refer to a process in which the target object re-searches for its own position information based on a global map. A process in which the robot is positioned for the first time may refer to, such as the process in which the robot is positioned when the robot is turned on. The difference between repositioning and ordinary positioning is that the robot that needs to be repositioned does not have the specific position information corresponding to the previous moment (prior information), while the ordinary positioning requires the robot to have the specific position information corresponding to the previous moment. That is to say, for the ordinary positioning, there exists the prior information, while for the repositioning, there is no prior information.

The environmental image data may refer to image information of the environment where the target object is currently located. The environmental image data may be captured with a camera on the target object, or may be acquired by the target object from the server. For example, when the target object is a robot, the environmental image data may be acquired by capturing with a camera installed on the robot.

As an example, the environmental image data of the environment where the target object is currently located is acquired by capturing with a camera installed on the target object.

In some embodiments, the environmental image data corresponds to a top-view visual image of the target object. The environmental image data of the target object is obtained by acquiring the top-view visual image of the target object, affects of dynamic objects in the environment can be filtered out. The top-view visual image can be captured by a camera installed above the target object. For example, when the front-view visual image of the target object serves as the environmental image data, the environmental image data is easily affected by the crowd or other dynamic objects in the environment, which is not conducive to the subsequent repositioning of the target object. Accordingly, the top-view visual image serves as the environmental image data of the target object, which can filter out the effects of dynamic objects in the environment, thereby facilitating the subsequent repositioning of the target object and further improving the accuracy of the repositioning of the target object.

Step 204: global description information is extracted from the environmental image data.

The global description information may refer to description information for recording a global feature of the environmental image data.

As an example, the global description information can be obtained by a feature extraction. For example, the environmental image data is input into a neural network model to perform the feature extraction, the global description information corresponding to the environmental image data can be obtained.

Compared to the conventional method in which the global description information is extracted by using a bag-of-words model or other methods, the global description information of the environmental image data is extracted through the neural network model, the correct map frame can be retrieved under different lighting, viewing angles and map frames, thereby improving the success rate of subsequent repositioning of the target object and the accuracy of repositioning.

Step 206: *K* map frames with the maximum similarity to the environmental image data are determined in the visual map according to the global description information; where *K* is an integer, and satisfies K≥1.

The visual map may refer to a combination of map frames configured to position the target object. The visual map is pre-set and may include a plurality of map frames, each of which may include position information, global description information, image feature points, and descriptors of all the image feature points of the map frame. The visual map may be stored in the server, and the target object may acquire the visual map from the server via the network.

As an example, a similarity between the environmental image data and each map frame may be calculated according to the global description information of the environmental image data and the global description information of each map frame in the visual map, and then similarities are sorted, and then *K* map frames are selected according to the sorted similarities.

For example, the calculated similarities may be sorted in a descending order of similarity, and then the map frames with the first *K* sorting numbers are selected as the *K* map frames with the maximum similarity.

Step 208: when it is determined that there are no a plurality of symmetrical scenes or similar scenes in the visual map for the current position of the target object according to the *K* map frames with the maximum similarity, and when the map frame with the maximum similarity among the *K* map frames is determined as the target similar scene for the current position, the target object is repositioned according to the map frame with the maximum similarity among the *K* map frames.

The similar scene may refer to that there exist a plurality of map frames similar to the environmental image data among the *K* map frames. A pliurality of similar scenes may refer to that there exist two or more similar map frames.

The symmetrical scene may refer to a map frame with a symmetrical texture among the *K* map frames.

The target similar scene may refer to a map frame matched with the environmental image data and capable of repositioning the target object.

As an example, when there are no a plurality of similar scenes or symmetrical scene among the *K* map frames, and there exists a map frame among the *K* map frames that can match the environmental image data and can be configured to reposition the target object, the current position of the target object is set as a relocatable point, and the repositioning is performed based on the relocatable point to obtain the initial position of the target object.

For example, when it is determined that there exists only one target similar scene, that is, after the relocatable point is determined, a position and orientation of the camera that captures the environmental image data can serve as the initial position of the target object. For example, the position and orientation of the camera can be calculated by using the Perspective-n-Point (PnP) algorithm. For example, when the position and orientation of each map frame are known, a direction with the maximum matching degree with the environmental image data can be selected to perform the PnP calculation, to obtain the position and orientation of the target object, that is, to determine the initial position of the target object.

In some embodiments, the repositioning method may further include, but is not limited to, the following steps: *M* positioning positions of the target object are acquired; when the *M* consecutive positioning is successful, the target object is repositioned successfully; when the positioning fails, the repositioning of the target object fails, the target object is moved in a preset area, and the process returns to perform the step of acquiring the environmental image data of the target object to be positioned at the current position.

The positioning position may refer to a position of the target object obtained by positioning via a positioning system. The positioning system may refer to a positioning system carried by the target object itself, and the positioning system can perform the positioning according to the initial position.

As an example, after the initial position of the target object is determined, the target object moves a certain distance within the preset area, and then is positioned by using a positioning system. When the positioning is successful, that is, a map frame matching the environmental image data of the moved position can be found among the map frames, it indicates that the positioning is successful. When the M consecutive positioning is successful, it indicates that the repositioning is successful. Otherwise, the repositioning of the target object fails. In this case, the target object needs to be moved to another position, and the process returns to perform the step 202 to restart the repositioning of the target object.

By determining whether the positioning system can successfully perform the positioning for *M* consecutive times according to the initial position, and then determining whether the repositioning is successful, it is possible to avoid the subsequent impact on the positioning system caused by an incorrect repositioning result.

In the above repositioning method, the *K* map frames with the maximum similarity to the environmental image data are determined in the visual map according to the global description information, and after it is determined that there are no a plurality of symmetrical scenes or similar scenes in the visual map for the current position of the target object according to the *K* map frames with the maximum similarity, and when the map frame with the maximum similarity among the K map frames is determined as the target similar scene for the current position, the target object is repositioned, thereby avoiding the interference of the symmetrical scenes or other similar scenes to the repositioning, and accordingly improving the accuracy of the repositioning of the target object.

In an embodiment, as shown in FIG. 3, the visual map may include the position and orientation information of each map frame, and the step of determining whether there are a plurality of similar scenes in the visual map for the current position of the target object according to the *K* map frames with the maximum similarity may further include the following steps.

Step 302: it is determined whether the *K* map frames belong to the same scene according to position-orientation distances among the *K* map frames with the maximum similarity.

Step 304: when it is determined that the *K* map frames belong to a plurality of scenes, it is determined that there exist a plurality of similar scenes in the visual map for the current position of the target object.

The position-orientation distance may refer to a distance between the poses of the map frames.

As an example, after the position and orientation information of each map frame is determined, the position-orientation distance between the map frames can be determined according to the position and orientation information of each map frame, and then it is determined whether the map frames belong to the same scene according to the position-orientation distance. When the K map frames belong to a plurality of scenes, it indicates that there exists a map frame similar to the current position of the target object in the *K* map frames, that is, there are a plurality of scenes similar to the current position in the visual map. At the moment, in order to ensure that the map frames matching the similar scene are not retrieved during the repositioning, the target object can be moved to reacquire the environmental image data, thereby improving the accuracy of the repositioning.

In some embodiments, whether the *K* map frames belong to the same scene may refer to whether the position and orientation information of the *K* map frames belongs to the same area. When the *K* map frames are concentrated in the same area, it can be determined that the map frames belong to the same scene. When the *K* map frames are not concentrated in the same area, it can be determined that the map frames belong to a plurality of scenes.

For example, when the distance between the map frames (the distance between the position and orientation information) is less than a first threshold value, it indicates that the distance between the map frames is smaller. At the moment, it is determined that these map frames are concentrated in the same area and the map frames belong to the same scene. When the distance between the map frames is greater than or equal to the first threshold value, it indicates that the distance between the map frames is larger. At the moment, it is determined that these map frames are not concentrated in the same area, and these map frames belong to a plurality of scenes.

In the embodiment, it is determined whether there are a plurality of similar scenes for the *K* map frames by determining the position-orientation distance between the *K* map frames with the maximum similarity, thereby avoiding the interference of similar scenes to the repositioning of the target object and improving the accuracy of the repositioning.

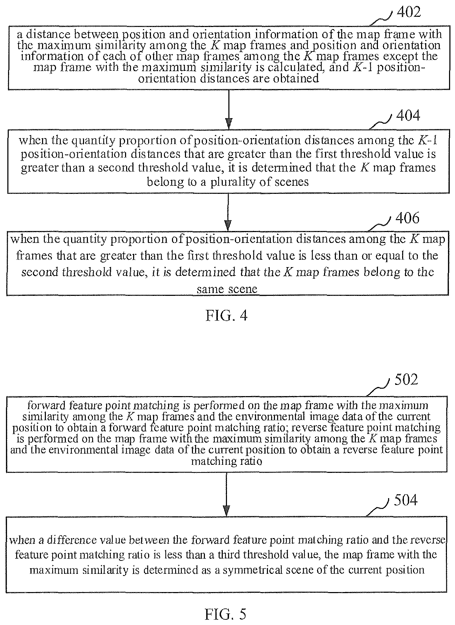

In some embodiments, as shown in FIG. 4, the step 302 may include but is not limited to the following steps.

Step 402: a distance between position and orientation information of the map frame with the maximum similarity among the *K* map frames and position and orientation information of each of other map frames among the *K* map frames other than the map frame with the maximum similarity is calculated, and *K*-1 position-orientation distances are obtained.

As an example, the map frame with the maximum similarity to the environmental image data may be selected from the *K* map frames, and then the distances between the position and orientation information of each of the remaining *K*-1 map frames and the position and orientation information of the map frame with the maximum similarity may be calculated, to obtain *K*-1 position-orientation distances.

For example, when K=5, that is, after the similarity calculation is performed according to the global description information of the environmental image data and the global description information of each map frame in the visual map, the first five map frames with the maximum similarity are selected. Subsequently, the map frame with the maximum similarity to the environmental image data is selected from the five map frames, and the position-orientation distance between each of the remaining four map frames and the map frame with the maximum similarity is calculated, and four position-orientation distances are obtained.

Step 404: when a quantity proportion of position-orientation distances among the *K*-1 position-orientation distances that are greater than the first threshold value is greater than a second threshold value, it is determined that the *K* map frames belong to a plurality of scenes.

The first threshold value may refer to a threshold value configured to determine the position-orientation distance. The first threshold value may be preset in the target object, or may be temporarily input to the target object by a user, or may be acquired by the target object from the server through the network, which is not specifically limited therein.

When the position-orientation distance between a certain map frame and the map frame with the maximum similarity is greater than the first threshold value, it indicates that the map frame is far away from the map frame with the maximum similarity, and it can be considered that the map frame and the map frame with the maximum similarity are not in the same area, that is, the map frame and the map frame with the maximum similarity are both similar scenes for the current position.

The second threshold value may refer to a threshold value configured to determine the number of similar scenes. The second threshold value may be pre-set in the target object, or may be temporarily input to the target object by a user, or may be acquired by the target object from the server through the network, which is not specifically limited herein.

As an example, among the K-1 position-orientation distances, the position-orientation distances greater than the first threshold value can be selected, and then the number of position-orientation distances greater than the first threshold value is counted. When the number of position-orientation distances greater than the first threshold value is greater than the second threshold value, it indicates that there are many similar scenes in the *K* map frames, and these similar scenes are not concentrated in the same area. At the moment, it is determined that the *K* map frames belong to a plurality of scenes.

Step 406: when the quantity proportion of position-orientation distances among the K map frames that are greater than the first threshold value is less than or equal to the second threshold value, it is determined that the K map frames belong to the same scene.

As an example, when the number of position-orientation distances greater than the first threshold value is less than the second threshold value, it indicates that there are fewer similar scenes in the *K* map frames, and it is determined that the *K* map frames belong to the same scene.

For example, when K=5, and 4 position-orientation distances are calculated. If only one of the 4 position-orientation distances is greater than the first threshold value, then there is only one position-orientation distance greater than the first threshold value. If the second threshold value is equal to 2, it indicates that there are fewer similar scenes in the 5 map frames, and it is determined that the 5 map frames belong to the same scene. If 3 of the 4 position-orientation distances are greater than the first threshold value, and there are three position-orientation distances greater than the first threshold value, it indicates that there are many similar scenes in the 5 map frames, and these similar scenes are not concentrated in the same area. At the moment, it is determined that the 5 map frames belong to a plurality of scenes.

In the technical solution of the embodiment of the present disclosure, it is determined whether the K map frames with the maximum similarity are in the same area by determining whether the K-1 position-orientation distances are greater than the first threshold value, and it is determined whether the K map frames belong to a plurality of scenes by determining the number of position-orientation distances among the K map frames that are greater than the first threshold value, thereby avoiding the interference of similar scenes to the repositioning of the target object, further avoiding retrieving map frames that match the similar scenes during the repositioning, and improving the accuracy of the repositioning.

In some embodiments, as shown in FIG. 5, the step of determining whether there exists the symmetrical scene in the visual map for the current position of the target object may include but is not limited to the following steps.

Step 502: forward feature point matching is performed on the map frame with the maximum similarity among the *K* map frames and the environmental image data of the current position to obtain a forward feature point matching ratio; reverse feature point matching is performed on the map frame with the maximum similarity among the K map frames and the environmental image data of the current position to obtain a reverse feature point matching ratio.

The forward feature point matching can refer to a process in which the image feature points and feature point descriptors extracted from environmental image data of the current position of the target object are matched with image feature points and feature point descriptors in the map frames.

The reverse feature point matching may refer to a process in which the environmental image data of the current position of the target object are rotated 180 degrees before the image feature points and feature point descriptors are extracted, and then the image feature points and feature point descriptors are matched with the image feature points and feature point descriptors in the map frames.

As an example, in the embodiment, each map frame in the visual map has a direction, and the environmental image data of the current position of the target object also has a direction. When an angle between the direction of the environmental image data and the direction of the map frame is greater than 90 degrees and less than 180 degrees, the environmental image data may not match the map frame. Accordingly, in order to calculate the matching ratio between the environmental image data and the map frame with the maximum similarity, it is necessary to simultaneously calculate a forward feature point matching ratio and a reverse feature point matching ratio between the map frame with the maximum similarity and the environmental image data of the current position. For example, the forward feature point matching is performed on the map frame with the maximum similarity and the environmental image data of the current position to obtain the forward feature point matching ratio, and then the environmental image data is rotated 180 degrees, and then the feature point matching ratio between the rotated environmental image data and the map frame with the maximum similarity is calculated to obtain the reverse feature point matching ratio.

Step 504: when a difference value between the forward feature point matching ratio and the reverse feature point matching ratio is less than a third threshold value, the map frame with the maximum similarity is determined as a symmetrical scene of the current position.

The third threshold value may refer to a threshold value for determining a difference value between the forward feature point matching ratio and the reverse feature point matching ratio. The third threshold value may be pre-set in the target object, or may be temporarily input to the target object by a user, or may be acquired by the target object from the server through the network, which is not limited therein.

As an example, when the difference value between the forward feature point matching ratio and the reverse feature point matching ratio is less than the third threshold value, it indicates that the map frame with the maximum similarity can be matched with the environmental image data in both the forward and reverse directions, that is, the texture of the environment in which the target object is currently located is relatively symmetric, and the content seen from the two directions is relatively similar, and the map frame with the maximum similarity is determined as a symmetrical scene (the environment in which the target object is currently located is determined as a symmetrical scene).

In the technical solution of the embodiment of the present disclosure, by determining whether the environment in which the target object is currently located is a symmetrical scene, it is possible to avoid the situation where the content in the symmetrical scene observed by the target object from different directions is consistent, thereby avoiding the situation of repositioning error caused by the symmetrical scene, further improving the success rate of the repositioning, and improving the accuracy of the repositioning.

In some embodiments, the step of determining whether there are a plurality of similar scenes in the visual map for the current position of the target object according to the K map frames with the maximum similarity may include: the forward feature point matching is performed on the map frame with the maximum similarity among the K map frames and the environmental image data of the current position to obtain the forward feature point matching ratio, and the reverse feature point matching is performed on the map frame with the maximum similarity among the K map frames and the environmental image data of the current position to obtain the reverse feature point matching ratio; when the larger one of the forward feature point matching ratio and the reverse feature point matching ratio is less than a fourth threshold value, it is determined that there exists a plurality of similar scenes in the visual map for the current position of the target object.

The fourth threshold value is a threshold value configured to determine whether the environmental image data matches the map frame with the maximum similarity. The fourth threshold value may be pre-set in the target object, or may be temporarily input to the target object by a user, or may be acquired by the target object from the server through the network, which is not specifically limited herein.

Specifically, when the difference value between the forward feature point matching ratio and the reverse feature point matching ratio is greater than the third threshold value, it indicates that there is a larger difference between the forward feature point matching ratio and the reverse feature point matching ratio. At the moment, the larger one of the forward feature point matching ratio and the reverse feature point matching ratio is acquired, and it is determined whether the larger one is less than the fourth threshold value; when the larger one is less than the fourth threshold value, it indicates that the map frame with the maximum similarity does not match the environmental image data of the current position of the target object, or when the larger one is less than the fourth threshold value, it indicates that there are a plurality of similar scenes in the visual map. At the moment, the target object needs to be moved again to reacquire the environmental image data. When the larger one is greater than or equal to the fourth threshold value, it indicates that the environmental image data can match the map frame with the maximum similarity. At the moment, the map frame with the maximum similarity serves as a target similar scene, and the map frame with the maximum similarity can be configured to position the target object.

In the technical solution of the embodiment of the present disclosure, the fourth threshold value is set to determine whether the environmental image data can match the map frame with the maximum similarity, and determine whether there are a plurality of similar scenes in the visual map for the current position of the target object, which facilitates the subsequent repositioning of the target object and improving the accuracy of the repositioning.

In some embodiments, the step of repositioning the target object according to the map frame with the maximum similarity among the K map frames may include but is not limited to the following step: the target object is repositioned according to a matching direction corresponding to the larger one of the forward feature point matching ratio and the reverse feature point matching ratio.

As an example, the larger one of the forward feature point matching ratio and the reverse feature point matching ratio is selected to determine a direction that best matches the environmental image data, and then the PnP calculation is performed according to the matching direction of the larger one to obtain the initial position of the robot, thereby achieving the repositioning of the target object.

For example, the position and orientation information of the camera that captures the environmental image data in a world coordinate system can be calculated through the PnP algorithm, and then the position and orientation information serves as the initial position of the target object.

In the technical solution of the embodiment of the present disclosure, the matching direction corresponding to the larger one of the forward feature point matching ratio and the reverse feature point matching ratio is determined, and then the repositioning is performed according to the matching direction to obtain the initial position of the target object, thereby improving the accuracy of the repositioning.

In some embodiments, the repositioning method may further include but is not limited to: when there exists a plurality of similar scenes or a symmetrical scene in the visual map for the current position of the target object, or the map frame with the maximum similarity among the K map frames is not the target similar scene for the current position, the target object is controlled to move, and the process returns to perform the step of acquiring the environmental image data of the target object to be positioned at the current position.

When there exists a symmetrical scene in the visual image, in order to avoid the effect of the symmetrical texture in the symmetrical scene on the repositioning (avoiding the situation where the contents observed by the target object in different directions are consistent, resulting in an error in the calculation of a yaw angle during the repositioning), it is necessary to control the target object to move within the preset area and return to the step of acquiring the environmental image data of the target object to be positioned at the current position, to re-acquire the environmental image data and reposition the target object, thereby improving the accuracy of the repositioning.

When there exist a plurality of similar scenes in the visual map, in order to avoid matching the map frames at the similar scenes during the global retrieval and matching, which may lead to a repositioning error, it is necessary to control the target object to move within the preset area and return to the step of acquiring the environmental image data of the target object to be positioned at the current position, to re-acquire the environmental image data and reposition the target object, thereby improving the accuracy of the repositioning.

When the map frame with the maximum similarity among the K map frames is not the target similar scene for the current position, it indicates that the *K* map frames cannot match the environmental image data. At the moment, it is necessary to control the target object to move within the preset area and return to the step of acquiring the environmental image data of the target object to be positioned at the current location, to re-acquire the environmental image data and reposition the target object, thereby improving the accuracy of the repositioning.

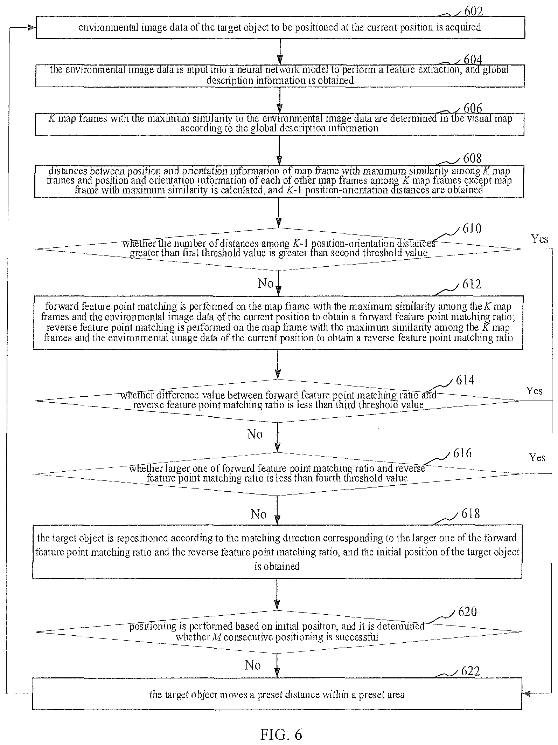

Referring to FIG. 6, in some embodiments, the repositioning method may include but is not limited to the following steps.

Step 602: environmental image data of the target object to be positioned at the current position is acquired.

Step 604: the environmental image data is input into a neural network model to perform a feature extraction, and global description information is obtained.

Step 606: *K* map frames with the maximum similarity to the environmental image data are determined in the visual map according to the global description information; K is an integer, and satisfies that *K*≥1.

Step 608: a distances between position and orientation information of a map frame with the maximum similarity among the K map frames and position and orientation information of each of other map frames among the *K* map frames other than the map frame with the maximum similarity is calculated, and *K*-1 position-orientation distances are obtained.

Step 610: it is determined whether the quantity proportion of position-orientation distances among the *K*-1 position-orientation distances greater than a first threshold value is greater than a second threshold value.

Specifically, when the quantity proportion of position-orientation distances among the *K*-1 position-orientation distances greater than the first threshold value is greater than the second threshold value, the process turns to perform step 622; when the quantity proportion of position-orientation distances among the *K*-1 position-orientation distances greater than the first threshold value is less than the second threshold, the process turns to perform step 612.

Step 612: forward feature point matching is performed on the map frame with the maximum similarity among the *K* map frames and the environmental image data of the current position to obtain a forward feature point matching ratio; reverse feature point matching is performed on the map frame with the maximum similarity among the *K* map frames and the environmental image data of the current position to obtain a reverse feature point matching ratio.

Step 614: it is determined whether a difference value between the forward feature point matching ratio and the reverse feature point matching ratio is less than a third threshold value.

Specifically, when the difference value between the forward feature point matching ratio and the reverse feature point matching ratio is less than the third threshold value, the map frame with the maximum similarity is determined as a symmetrical scene, and the process turns to perform step 622. When the difference value between the forward feature point matching ratio and the reverse feature point matching ratio is greater than or equal to the third threshold value, the process turns to perform step 616.

Step 616: it is determined whether the larger one of the forward feature point matching ratio and the reverse feature point matching ratio is less than a fourth threshold value.

When the larger one of the forward feature point matching ratio and the reverse feature point matching ratio is less than the fourth threshold value, it indicates that there exist a plurality of similar scenes in the visual map for the current position of the target object, or it indicates that there exist a plurality of similar scenes in the visual map for the current position of the target object, the process turns to perform step 622. When the larger one of the forward feature point matching ratio and the reverse feature point matching ratio is greater than or equal to the fourth threshold value, it indicates that the map frame with the maximum similarity can match the environmental image data of the current position, the repositioning can be performed at the current position, and the current position is marked as a repositioning point. At the moment, the process turns to perform step 618.

Step 618: the target object is repositioned according to the matching direction corresponding to the larger one of the forward feature point matching ratio and the reverse feature point matching ratio, and the initial position of the target object is obtained.

Step 620: the positioning is performed based on the initial position, and it is determined whether *M* consecutive positioning is successful, where *M* is a positive integer.

Specifically, if *M* consecutive positioning is successful, it indicates that the repositioning is successful. Otherwise, it indicates that the repositioning fails, and the process turns to perform step 622.

Step 622: the target object moves a preset distance within a preset area, and the process turns to perform the step 602.

It should be noted that, for the specific processing flows of steps 602 to 622, reference can be made to the aforementioned embodiments, which will not be repeated here.

In the technical solution of the embodiment of the present disclosure, the K map frames with the maximum similarity to the environmental image data in the visual map are determined according to the global description information; when it is determined that there are no symmetrical scene or a plurality of similar scenes in the visual map for the current position of the target object according to the *K* map frames with the maximum similarity, and when the map frame with the maximum similarity among the *K* map frames is determined as the target similar scene for the current position, the target object is repositioned, which can avoid the interference of the symmetrical scene or other similar scenes to the repositioning, thereby improving the accuracy of the repositioning. Further, the fourth threshold value is set to determine whether the environmental image data can be matched with the map frame with the maximum similarity, thereby facilitating the subsequent repositioning of the target object, and improving the accuracy of the repositioning.

It should be appreciated that although the steps in the flow charts involved in the above embodiments are displayed in sequence as indicated by the arrows, these steps are not definitely executed in the order indicated by the arrows. Unless otherwise specified herein, there is no strict order limitation for the execution of these steps, and these steps may be executed in other orders. Moreover, at least a part of the steps in the flow charts involved in the above embodiments may include a plurality of steps or a plurality of stages. These steps or stages are not definitely executed at the same time, but can be executed at different moments. The execution order of these steps or stages is not definitely sequential, but can be executed in turn or alternately with other steps or at least part of the steps or stages in other steps.

Based on the same inventive concept, in an embodiment of the present disclosure, a repositioning apparatus for implementing the above-mentioned repositioning method is provided. The solution provided by the apparatus to solve the problem is similar to the solution described in the above method.

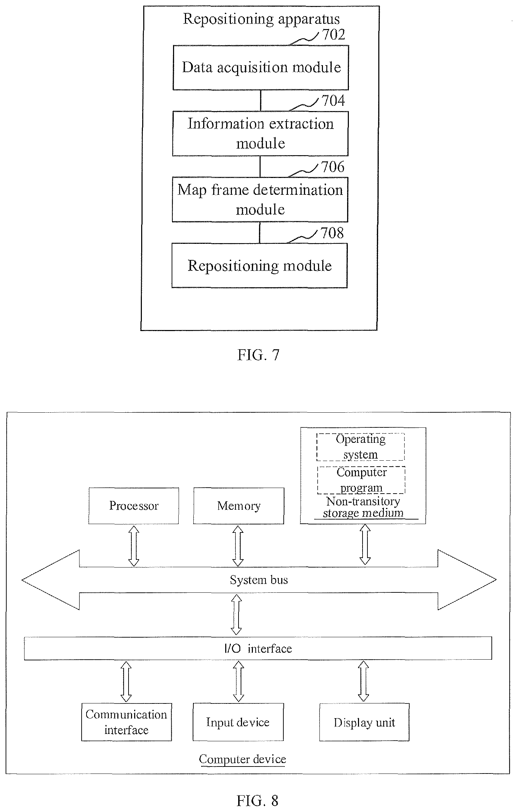

In an embodiment, as shown in FIG. 7, a repositioning apparatus is provided, including: a data acquisition module 702, an information extraction module 704, a map frame determination module 706, and a repositioning module 708.

The data acquisition module 702 is configured to acquire environmental image data of a target object to be positioned at a current position.

The information extraction module 704 is configured to extract global description information from the environmental image data.

The map frame determination module 706 is configured to determine K map frames with a maximum similarity to the environmental image data in the visual map according to the global description information; where *K* is an integer, and satisfies *K*≥ 1.

The repositioning module 708 is configured to, when it is determined that there is no symmetrical scene or a plurality of similar scenes in the visual map for the current position of the target object according to the *K* map frames with the maximum similarity, and when a map frame with a maximum similarity among the K map frames is determined as a target similar scene for the current position, reposition the target object according to the map frame with the maximum similarity among the K map frames.

In some embodiments, the visual map may include position and orientation information of each map frame, and the repositioning module 708 is further configured to: determine whether the *K* map frames belong to the same scene according to position-orientation distances among the *K* map frames with the maximum similarity; when it is determined that the *K* map frames belong to a plurality of scenes, determine that there exist a plurality of similar scenes in the visual map for the current position of the target object.

In some embodiments, the repositioning module 708 is further configured to: calculate a distance between position and orientation information of the map frame with the maximum similarity among the *K* map frames and position and orientation information of each of other map frames among the K map frames other than the map frame with the maximum similarity, and obtain *K*-1 position-orientation distances; when the quantity proportion of position-orientation distances among the *K-*1 position-orientation distances that are greater than a first threshold value is greater than a second threshold value, determine that the *K* map frames belong to a plurality of scenes; when the quantity proportion of position-orientation distances among the *K* map frames that are greater than the first threshold value is less than or equal to the second threshold value, determine that the *K* map frames belong to the same scene.

In some embodiments, the repositioning module 708 is further configured to: perform forward feature point matching on the map frame with the maximum similarity among the *K* map frames and the environmental image data of the current position to obtain a forward feature point matching ratio, and perform reverse feature point matching on the map frame with the maximum similarity among the *K* map frames and the environmental image data of the current position to obtain a reverse feature point matching ratio; when a difference value between the forward feature point matching ratio and the reverse feature point matching ratio is less than a third threshold value, determine the map frame with the maximum similarity as a symmetrical scene for the current position.

In some embodiments, the repositioning module 708 is further configured to perform the forward feature point matching on the map frame with the maximum similarity among the *K* map frames and the environmental image data of the current position to obtain the forward feature point matching ratio, and perform the reverse feature point matching on the map frame with the maximum similarity among the *K* map frames and the environmental image data of the current position to obtain the reverse feature point matching ratio; when a larger one of the forward feature point matching ratio and the reverse feature point matching ratio is less than a fourth threshold value, determine that there exists a plurality of similar scenes in the visual map for the current position of the target object.

In some embodiments, the repositioning module 708 is further configured to reposition the target object according to a matching direction corresponding to the larger one of the forward feature point matching ratio and the reverse feature point matching ratio.

In some embodiments, the repositioning module 708 is further configured to, when there exists a plurality of similar scenes or a symmetrical scene in the visual map for the current position of the target object, or the map frame with the maximum similarity among the *K* map frames is not the target similar scene for the current position, control the target object to move, and return to perform the step of acquiring the environmental image data of the target object to be positioned at the current position.

In some embodiments, the repositioning apparatus may further include:
a positioning module configured to: acquire *M* positions of the target object after *M* consecutive positioning; determine that the target object is repositioned successfully when the M consecutive positioning is successful; determine that the repositioning of the target object fails when the positioning fails, move the target object in a preset area, and return to the step of acquiring the environmental image data of the target object to be positioned at the current position.

The modules in the above repositioning apparatus can be fully or partially implemented by software, hardware or a combination thereof. The above modules may be embedded in or independent of a processor in a computer device in the form of hardware, or may be stored in a memory in a computer device in the form of software, so that the processor can invoke and execute operations corresponding to the above modules.

In an embodiment, a computer device is provided. The computer device may be a terminal, and an internal structure diagram thereof may be as shown in FIG. 8. The computer device may include a processor, a memory, a communication interface, a display screen and an input device connected to each other through a system bus. The processor of the computer device is configured to provide computing and control capabilities. The memory of the computer device may include a non-transitory storage medium and an internal memory. The non-transitory storage medium stores an operating system and a computer program. The internal memory provides an environment for the operations of the operating system and computer program in the non-transitory storage medium. The communication interface of the computer device is configured to communicate with an external terminal in a wired or wireless manner, and the wireless manner can be implemented through WIFI, a mobile cellular network, a near field communication (NFC) or other technologies. When the computer program is executed by the processor, a repositioning method is implemented. The display screen of the computer device can be a liquid crystal display screen or an electronic ink display screen, and the input device of the computer device may be a touch layer covering the display screen, or a key, trackball or touchpad provided on the housing of the computer device housing, or an external keyboard, touchpad or mouse.

Those skilled in the art may understand that the structure shown in FIG. 8 is merely a block diagram of a partial structure related to the solution of the present disclosure, and does not constitute a limitation on the computer device to which the solution of the present disclosure is applied. The specific computer device may include more or fewer components than shown in the figure, or combine certain components, or have a different arrangement of components.

In an embodiment, a computer device is provided, including a processor and a memory storing a computer program, and the processor, when executing the computer program, may implement the following steps of: acquiring environmental image data of a target object to be positioned at a current position; extracting global description information from the environmental image data; determining *K* map frames with a maximum similarity to the environmental image data in the visual map according to the global description information; where *K* is an integer, and satisfies K≥1; when it is determined that there is no symmetrical scene or a plurality of similar scenes in the visual map for the current position of the target object according to the *K* map frames with the maximum similarity, and when a map frame with a maximum similarity among the *K* map frames is determined as a target similar scene for the current position, repositioning the target object according to the map frame with the maximum similarity among the *K* map frames.

In an embodiment, the processor, when executing the computer program, may further implement the following steps of: determining whether the *K* map frames belong to the same scene according to position-orientation distances among the *K* map frames with the maximum similarity; when it is determined that the *K* map frames belong to a plurality of scenes, determining that there exist a plurality of similar scenes in the visual map for the current position of the target object.

In an embodiment, the processor, when executing the computer program, may further implement the following steps of: calculating a distance between position and orientation information of the map frame with the maximum similarity among the *K* map frames and position and orientation information of each of other map frames among the *K* map frames other than the map frame with the maximum similarity, and obtaining *K*-1 position-orientation distances; when the quantity proportion of position-orientation distances among the *K*-1 position-orientation distances that are greater than a first threshold value is greater than a second threshold value, determining that the *K* map frames belong to a plurality of scenes; when the quantity proportion of position-orientation distances among the *K* map frames that are greater than the first threshold value is less than or equal to the second threshold value, determining that the *K* map frames belong to the same scene.

In an embodiment, the processor, when executing the computer program, may further implement the following steps of: performing forward feature point matching on the map frame with the maximum similarity among the *K* map frames and the environmental image data of the current position to obtain a forward feature point matching ratio, and performing reverse feature point matching on the map frame with the maximum similarity among the *K* map frames and the environmental image data of the current position to obtain a reverse feature point matching ratio; when a difference value between the forward feature point matching ratio and the reverse feature point matching ratio is less than a third threshold value, determining the map frame with the maximum similarity as a symmetrical scene for the current position.

In an embodiment, the processor, when executing the computer program, may further implement the following steps of: performing the forward feature point matching on the map frame with the maximum similarity among the *K* map frames and the environmental image data of the current position to obtain the forward feature point matching ratio, and performing the reverse feature point matching on the map frame with the maximum similarity among the K map frames and the environmental image data of the current position to obtain the reverse feature point matching ratio; when a larger one of the forward feature point matching ratio and the reverse feature point matching ratio is less than a fourth threshold value, determining that there exists a plurality of similar scenes in the visual map for the current position of the target object.

In an embodiment, the processor, when executing the computer program, may implement the following steps of: repositioning the target object according to a matching direction corresponding to the larger one of the forward feature point matching ratio and the reverse feature point matching ratio.

In an embodiment, the processor, when executing the computer program, may further implement the following steps of: when there exists a plurality of similar scenes or a symmetrical scene in the visual map for the current position of the target object, or the map frame with the maximum similarity among the *K* map frames is not the target similar scene for the current position, controlling the target object to move, and returning to perform the step of acquiring the environmental image data of the target object to be positioned at the current position.

In an embodiment, the processor, when executing the computer program, may further implement the following steps of: acquiring *M* positions of the target object after M consecutive positioning; determining that the target object is repositioned successfully when the M consecutive positioning is successful; determining that the repositioning of the target object fails when the positioning fails, moving the target object in a preset area, and returning to the step of acquiring the environmental image data of the target object to be positioned at the current position.

In an embodiment, a computer-readable storage medium is provided, on which a computer program is stored, and the computer program, when executed by a processor, may cause the processor to implement the following steps of: acquiring environmental image data of a target object to be positioned at a current position; extracting global description information from the environmental image data; determining *K* map frames with a maximum similarity to the environmental image data in the visual map according to the global description information; where K is an integer, and satisfies K≥1; when it is determined that there is no symmetrical scene or a plurality of similar scenes in the visual map for the current position of the target object according to the *K* map frames with the maximum similarity, and when a map frame with a maximum similarity among the *K* map frames is determined as a target similar scene for the current position, repositioning the target object according to the map frame with the maximum similarity among the *K* map frames.

In an embodiment, the computer program, when executed by the processor, may further cause the processor to implement the following steps of: determining whether the *K* map frames belong to the same scene according to position-orientation distances among the *K* map frames with the maximum similarity; when it is determined that the *K* map frames belong to a plurality of scenes, determining that there exist a plurality of similar scenes in the visual map for the current position of the target object.

In an embodiment, the computer program, when executed by the processor, may further cause the processor to implement the following steps of: calculating a distance between position and orientation information of the map frame with the maximum similarity among the *K* map frames and position and orientation information of each of other map frames among the *K* map frames other than the map frame with the maximum similarity, and obtaining *K*-1 position-orientation distances; when the quantity proportion of position-orientation distances among the *K*-1 position-orientation distances that are greater than a first threshold value is greater than a second threshold value, determining that the *K* map frames belong to a plurality of scenes; when the quantity proportion of position-orientation distances among the *K* map frames that are greater than the first threshold value is less than or equal to the second threshold value, determining that the *K* map frames belong to the same scene.

In an embodiment, the computer program, when executed by the processor, may further cause the processor to implement the following steps of: performing forward feature point matching on the map frame with the maximum similarity among the *K* map frames and the environmental image data of the current position to obtain a forward feature point matching ratio, and performing reverse feature point matching on the map frame with the maximum similarity among the *K* map frames and the environmental image data of the current position to obtain a reverse feature point matching ratio; when a difference value between the forward feature point matching ratio and the reverse feature point matching ratio is less than a third threshold value, determining the map frame with the maximum similarity as a symmetrical scene for the current position.

In an embodiment, the computer program, when executed by the processor, may further cause the processor to implement the following steps of: performing the forward feature point matching on the map frame with the maximum similarity among the K map frames and the environmental image data of the current position to obtain the forward feature point matching ratio, and performing the reverse feature point matching on the map frame with the maximum similarity among the *K* map frames and the environmental image data of the current position to obtain the reverse feature point matching ratio; when a larger one of the forward feature point matching ratio and the reverse feature point matching ratio is less than a fourth threshold value, determining that there exists a plurality of similar scenes in the visual map for the current position of the target object.

In an embodiment, the computer program, when executed by the processor, may further cause the processor to implement the following steps of: repositioning the target object according to a matching direction corresponding to the larger one of the forward feature point matching ratio and the reverse feature point matching ratio.

In an embodiment, the computer program, when executed by the processor, may further cause the processor to implement the following steps of: when there exists a plurality of similar scenes or a symmetrical scene in the visual map for the current position of the target object, or the map frame with the maximum similarity among the *K* map frames is not the target similar scene for the current position, controlling the target object to move, and returning to perform the step of acquiring the environmental image data of the target object to be positioned at the current position.

In an embodiment, the computer program, when executed by the processor, may further cause the processor to implement the following steps of: acquiring M positions of the target object after *M* consecutive positioning; determining that the target object is repositioned successfully when the M consecutive positioning is successful; determining that the repositioning of the target object fails when the positioning fails, moving the target object in a preset area, and returning to the step of acquiring the environmental image data of the target object to be positioned at the current position.

In an embodiment, a computer program product is provided, including a computer program, which, when executed by a processor, may cause the processor to implement the following steps of: acquiring environmental image data of a target object to be positioned at a current position; extracting global description information from the environmental image data; determining *K* map frames with a maximum similarity to the environmental image data in the visual map according to the global description information; where *K* is an integer, and satisfies K≥1; when it is determined that there is no symmetrical scene or a plurality of similar scenes in the visual map for the current position of the target object according to the *K* map frames with the maximum similarity, and when a map frame with a maximum similarity among the K map frames is determined as a target similar scene for the current position, repositioning the target object according to the map frame with the maximum similarity among the *K* map frames.

In an embodiment, the computer program, when executed by the processor, may further cause the processor to implement the following steps of: determining whether the K map frames belong to the same scene according to position-orientation distances among the *K* map frames with the maximum similarity; when it is determined that the *K* map frames belong to a plurality of scenes, determining that there exist a plurality of similar scenes in the visual map for the current position of the target object.

In an embodiment, the computer program, when executed by the processor, may further cause the processor to implement the following steps of: calculating a distance between position and orientation information of the map frame with the maximum similarity among the *K* map frames and position and orientation information of each of other map frames among the *K* map frames other than the map frame with the maximum similarity, and obtaining *K*-1 position-orientation distances; when the quantity proportion of position-orientation distances among the *K*-1 position-orientation distances that are greater than a first threshold value is greater than a second threshold value, determining that the *K* map frames belong to a plurality of scenes; when the quantity proportion of position-orientation distances among the K map frames that are greater than the first threshold value is less than or equal to the second threshold value, determining that the *K* map frames belong to the same scene.

In an embodiment, the computer program, when executed by the processor, may further cause the processor to implement the following steps of: performing forward feature point matching on the map frame with the maximum similarity among the K map frames and the environmental image data of the current position to obtain a forward feature point matching ratio, and performing reverse feature point matching on the map frame with the maximum similarity among the K map frames and the environmental image data of the current position to obtain a reverse feature point matching ratio; when a difference value between the forward feature point matching ratio and the reverse feature point matching ratio is less than a third threshold value, determining the map frame with the maximum similarity as a symmetrical scene for the current position.

In an embodiment, the computer program, when executed by the processor, may further cause the processor to implement the following steps of: performing the forward feature point matching on the map frame with the maximum similarity among the *K* map frames and the environmental image data of the current position to obtain the forward feature point matching ratio, and performing the reverse feature point matching on the map frame with the maximum similarity among the *K* map frames and the environmental image data of the current position to obtain the reverse feature point matching ratio; when a larger one of the forward feature point matching ratio and the reverse feature point matching ratio is less than a fourth threshold value, determining that there exists a plurality of similar scenes in the visual map for the current position of the target object.

In an embodiment, the computer program, when executed by the processor, may further cause the processor to implement the following steps of: repositioning the target object according to a matching direction corresponding to the larger one of the forward feature point matching ratio and the reverse feature point matching ratio.

In an embodiment, the computer program, when executed by the processor, may further cause the processor to implement the following steps of: when there exists a plurality of similar scenes or a symmetrical scene in the visual map for the current position of the target object, or the map frame with the maximum similarity among the *K* map frames is not the target similar scene for the current position, controlling the target object to move, and returning to perform the step of acquiring the environmental image data of the target object to be positioned at the current position.

In an embodiment, the computer program, when executed by the processor, may further cause the processor to implement the following steps of: acquiring *M* positions of the target object after *M* consecutive positioning; determining that the target object is repositioned successfully when the M consecutive positioning is successful; determining that the repositioning of the target object fails when the positioning fails, moving the target object in a preset area, and returning to the step of acquiring the environmental image data of the target object to be positioned at the current position.

Those of ordinary skill in the art can understand that all or part of the processes in the methods of the above embodiments can be completed by instructing relevant hardware through a computer program. The computer program can be stored in a non-transitory computer-readable storage. When executed, the computer program may implement the processes of the above method embodiments. Any reference to memory, storage, database or other media used in the embodiments provided in the present application may include at least one of non-transitory and transitory memory. The non-transitory memory may include read-only memory (ROM), magnetic tape, floppy disk, flash memory or optical memory, etc. The transitory memory may include Random Access Memory (RAM) or external cache memory. By way of illustration but not limitation, the RAM can be in various forms, such as Static Random Access Memory (SRAM) or Dynamic Random Access Memory (DRAM), etc. The database involved in each embodiment provided in the present disclosure may include at least one of a relational database and a non-relational database. The non-relational databases may include, but are not limited to, distributed databases based on blockchain. The processor involved in each embodiment provided in the present disclosure may be a general-purpose processor, a central processing unit, a graphics processor, a digital signal processor, a programmable logic unit, a data processing logic unit based on quantum computing, etc., but is not limited thereto.

The technical features in the above embodiments can be combined in any way. To simplify the description, not all possible combinations of the technical features in the above embodiments are described. However, as long as there is no contradiction in the combination of these technical features, all possible combinations should be regarded as being within the scope of the present application.

The above-described embodiments only express several implementation modes of the present application, and the descriptions are relatively specific and detailed, but should not be construed as limiting the scope of the present application. It should be noted that, those of ordinary skill in the art can make several modifications and improvements without departing from the concept of the present application, and these all fall within the protection scope of the present application. Therefore, the protection scope of the present application should be subject to the appended claims.

## Claims

1. A repositioning method, comprising:
acquiring environmental image data of a target object to be positioned at a current position;
extracting global description information from the environmental image data;
determining K map frames with a maximum similarity to the environmental image data in the visual map according to the global description information, where K is an integer and satisfies *K*≥1; and
when determining that there is no symmetrical scene or a plurality of similar scenes in the visual map for the current position of the target object according to the K map frames with the maximum similarity, and when a map frame with a maximum similarity among the K map frames is determined as a target similar scene for the current position, repositioning the target object according to the map frame with the maximum similarity among the K map frames.

2. The method according to claim 1, wherein the environmental image data is a top-view visual image of the target object, and the top-view visual image is captured by a camera installed above the target object.

3. The method according to claim 1, wherein the extracting the global description information from the environmental image data comprises:
inputting the environmental image data into a neural network model to perfrom a feature extraction, and obtaining the global description information corresponding to the environmental image data, wherein the global description information refers to description information for recording a global feature of the environmental image data.

4. The method according to claim 1, wherein a map frame comprises position and orientation information, global description information, image feature points, and descriptors of all image feature points of the map frame.

5. The method according to claim 1,wherein the determining *K* map frames with a maximum similarity to the environmental image data in the visual map according to the global description information comprises:
calculating a similarity between the environmental image data and each map frame according to the global description information of the environmental image data and global description information of each map frame in the visual map, sorting similarities, and selecting the K map frames according to the sorted similarities.

6. The method according to claim 1,wherein the visual map comprises the position and orientation information of each map frame;
the determining whether there exists the plurality of similar scenes in the visual map for the current position of the target object according to the *K* map frames with the maximum similarity comprises:
determining whether the *K* map frames belong to the same scene according to position-orientation distances among the *K* map frames with the maximum similarity;
when the K map frames are determined to belong to a plurality of scenes, determining that there exists the plurality of similar scenes in the visual map for the current position of the target object.

7. The method according to claim 6, wherein the determining whether the *K* map frames belong to the same scene according to the position-orientation distances among the *K* map frames with the maximum similarity comprises:
calculating a distance between position and orientation information of the map frame with the maximum similarity among the K map frames and position and orientation information of each of other map frames among the *K* map frames other than the map frame with the maximum similarity, and obtaining *K*-1 position-orientation distances;
when a quantity proportion of position-orientation distances among the *K-*1 position-orientation distances that are greater than a first threshold value is greater than a second threshold value, determining that the *K* map frames belong to a plurality of scenes;
when the quantity proportion of position-orientation distances among the *K* map frames that are greater than the first threshold value is less than or equal to the second threshold value, determining that the *K* map frames belong to the same scene.

8. The method according to claim 1, wherein the determining whether there exists a symmetrical scene in the visual map for the current position of the target object comprises:
performing forward feature point matching on the map frame with the maximum similarity among the *K* map frames and the environmental image data of the current position to obtain a forward feature point matching ratio, and performing reverse feature point matching on the map frame with the maximum similarity among the *K* map frames and the environmental image data of the current position to obtain a reverse feature point matching ratio;
when a difference value between the forward feature point matching ratio and the reverse feature point matching ratio is less than a third threshold value, determining the map frame with the maximum similarity as the symmetrical scene for the current position.

9. The method according to claim 8, wherein the forward feature point matching refers to a process in which image feature points and feature point descriptors extracted from the environmental image data of the current position of the target object are matched with image feature points and feature point descriptors in the map frame with the maximum similarity.

10. The method according to claim 8, wherein the reverse feature point matching refers to a process in which the environmental image data of the current position of the target object are rotated 180 degrees before image feature points and feature point descriptors are extracted, and the image feature points and the feature point descriptors are matched with image feature points and feature point descriptors in the map frame.

11. The method according to claim 1, further comprising: when there are no pluraliuty of similar scenes or symmetrical scene in the *K* map frames, and there is one map frame among the K map frames which is capable of matching the environmental image data and is capable of being configured to reposition the target object, setting the current position of the target object as a relocatable point, repositioning is performed based on the relocatable point, and obtaining an initial position of the target object.

12. The method according to claim 1, wherein the symmetrical scene refers to a map frame with a symmetrical texture among the *K* map frames.

13. The method according to claim 1, wherein the determining whether there exists a plurality of similar scenes in the visual map for the current position of the target object according to the *K* map frames with the maximum similarity comprises:
performing forward feature point matching on the map frame with the maximum similarity among the *K* map frames and the environmental image data of the current position to obtain a forward feature point matching ratio, and performing reverse feature point matching on the map frame with the maximum similarity among the *K* map frames and the environmental image data of the current position to obtain a reverse feature point matching ratio;
when a larger one of the forward feature point matching ratio and the reverse feature point matching ratio is less than a fourth threshold value, determining that there exists a plurality of similar scenes in the visual map for the current position of the target object.

14. The method according to claim 13, wherein the repositioning the target object according to the map frame with the maximum similarity among the *K* map frames comprises:
repositioning the target object according to a matching direction corresponding to the larger one of the forward feature point matching ratio and the reverse feature point matching ratio.

15. The method according to claim 14, wherein the repositioning the target object according to the matching direction corresponding to the larger one of the forward feature point matching ratio and the reverse feature point matching ratio comprises:
performing a PnP calculation based on the matching direction corresponding to the larger one of the forward feature point matching ratio and the reverse feature point matching ratio, and obtaining an initial position of the target object.

16. The method according to any one of claims 1 to 15, further comprising: when there exists the plurality of similar scenes or the symmetrical scene in the visual map for the current position of the target object, or the map frame with the maximum similarity among the *K* map frames is not the target similar scene for the current position, controlling the target object to move, and returning to acquire the environmental image data of the target object to be positioned at the current position.

17. The method according to any one of claims 1 to 15, further comprising:
acquiring M positions of the target object after *M* consecutive positioning;
determining that the target object is repositioned successfully when the *M* consecutive positioning is successful, where M is a positive integer;
determining that the repositioning of the target object fails when the positioning fails, moving the target object in a preset area, and returning to acquire the environmental image data of the target object to be positioned at the current position.

18. A repositioning apparatus, comprising:
a data acquisition module, configured to acquire environmental image data of a target object to be positioned at a current position;
an information extraction module, configured to extract global description information from the environmental image data;
a map frame determination module, configured to determine *K* map frames with a maximum similarity to the environmental image data in the visual map according to the global description information, where *K* is an integer, and satisfies *K*≥1;
a repositioning module, configured to, when determining that there is no symmetrical scene or a plurality of similar scenes in the visual map for the current position of the target object according to the *K* map frames with the maximum similarity, and when a map frame with a maximum similarity among the *K* map frames is determined as a target similar scene for the current position, reposition the target object according to the map frame with the maximum similarity among the K map frames.

19. A computer device, comprising a processor and a memory storing a computer program, wherein the processor, when executing the computer program, implements the method of any one of claims 1 to 17.

20. A computer-readable storage medium, on which a computer program is stored, wherein the computer program, when executed by a processor, causes the processor to implement the method of any one of claims 1 to 17.
